# EUROPÄISCHE PATENTSCHRIFT

(11) **EP 1 354 740 B1**
(45) Veröffentlichungstag und Bekanntmachung des Hinweises auf die Patenterteilung: **14.10.2015**
(21) Anmeldenummer: 03008131.9
(22) Anmeldetag: 08.04.2003
(51) Int. Cl.: B60J 7/08, B60J 7/057

(54) **Schutzeinrichtung an einem Fahrzeug mit einem verstellbaren Fahrzeugteil**
Protective device for vehicles with an adjustable part
Dispositif protecteur pour véhicules avec un élément réglable

(30) Priorität: 17.04.2002 DE 10216901
(43) Veröffentlichungstag der Anmeldung: 22.10.2003
(73) Patentinhaber: Bayerische Motoren Werke Aktiengesellschaft, 80809 München (DE)
(72) Erfinder: Dangl, Wolfgang, 84048 Mainburg (DE); Kluge, Reinhold, 85399 Hallbergmoos (DE)

(56) Entgegenhaltungen:
- EP-A- 0 952 459
- DE-A- 10 009 692
- DE-A- 10 011 263
- DE-A- 19 501 612
- US-A- 5 321 345

## Beschreibung

Die Erfindung betrifft eine Schutzeinrichtung an einem Fahrzeug mit einem verstellbaren Fahrzeugteil, mit den im Oberbegriff des Patentanspruches 1 angegebenen Merkmalen.

Eine solche Schutzeinrichtung ist aus DE 100 09 692 A1 bekannt.

Eine derartige Schutzeinrichtung ist in der DE 195 01 612 A1 an einem Kraftfahrzeug verwendet und weist zwei Messeinrichtungen auf, die bewegliche Objekte in kleineren und größeren Entfernungen erfassen sollen, um Kollisionen des Kraftfahrzeugs mit den Objekten im Fahrbetrieb bzw. beim Einparken zu vermeiden.

Der Erfindung liegt die Aufgabe zu Grunde, eine Schutzeinrichtung mit den Merkmalen im Oberbegriff des Patentanspruches 1 anzugeben, die beim Verstellen eines motorisch verstellbaren Fahrzeugteiles ein Einklemmen eines beweglichen Objekts zwischen dem verstellbaren Fahrzeugteil und einem anderen beweglichen oder ortsfesten Bauteil des Fahrzeugs verhindern kann.

Diese Aufgabe ist durch die im Patentanspruch 1 angegebenen Merkmale gelöst. Vorteilhafte Ausgestaltungen der Erfindung sind den Unteransprüchen entnehmbar.

Mit der Schutzeinrichtung kann beispielsweise bei einem durch Signale eines Sensors oder einer Fernsteuerungseinrichtung bewirkten selbsttätigen motorischen Verstellen eines Falt- oder Klappverdecks oder einer Tür oder Klappe an dem Fahrzeug ein Einklemmen eines beweglichen Objekts, beispielsweise eines Körperteiles einer Person, zwischen zwei beweglichen Teilen des Falt- oder Klappverdecks oder zwischen einem beweglichen Teil des Falt- oder Klappverdecks oder der motorisch verstellbaren Tür oder Klappe und jeweils einem ortsfesten Bauteil des Fahrzeugs verhindert werden. Dies wird dadurch erreicht, dass bei oder zusätzlich vor dem selbsttätigen motorischen Verstellen des Fahrzeugteiles eine Messeinrichtung wenigstens einen in der Nähe des motorisch verstellbaren Fahrzeugteiles befindlichen Raum überwacht und eine Abschalteinrichtung veranlasst, die motorische Verstelleinrichtung abzuschalten, wenn sich ein bewegliches Objekt in dem überwachten Raum befindet. Wenn das motorisch selbsttätig verstellbare Fahrzeugteil durch ein Falt- oder Klappverdeck eines Kraftfahrzeugs gebildet ist, können von der Messeinrichtung beispielsweise der Fahrgastraum und/oder die äußeren Seitenbereiche oder zusätzlich der Heckbereich des Fahrzeugs und/oder der Bereich über dem oberen Windlauf an der vorderen Windschutzscheibe überwacht werden.

Drei Ausführungsbeispiele der Erfindung werden anhand einer Zeichnung näher erläutert. Es zeigen
- Figur 1: ein erstes Ausführungsbeispiel, bei dem die Messeinrichtung den Fahrgastraum und die äußeren Seitenbereiche des Fahrzeugs überwacht,
- Figur 2: ein zweites Ausführungsbeispiel mit einer Messeinrichtung, die den in der Figur dargestellten Fahrgastraum und einen nicht dargestellten Außenbereich des Fahrzeugs überwacht,
- Figur 3: das in Figur 2 dargestellte Ausführungsbeispiel, bei dem der von der Messeinrichtung überwachte Außenbereich gekennzeichnet ist und
- Figur 4: ein drittes, die Schutzeinrichtung gemäß Figur 1 erweiterndes Ausführungsbeispiel, bei dem die Messeinrichtung zusätzlich die hinteren vier Sensoren einer Parkraum-Überwachungseinrichtung erfasst.

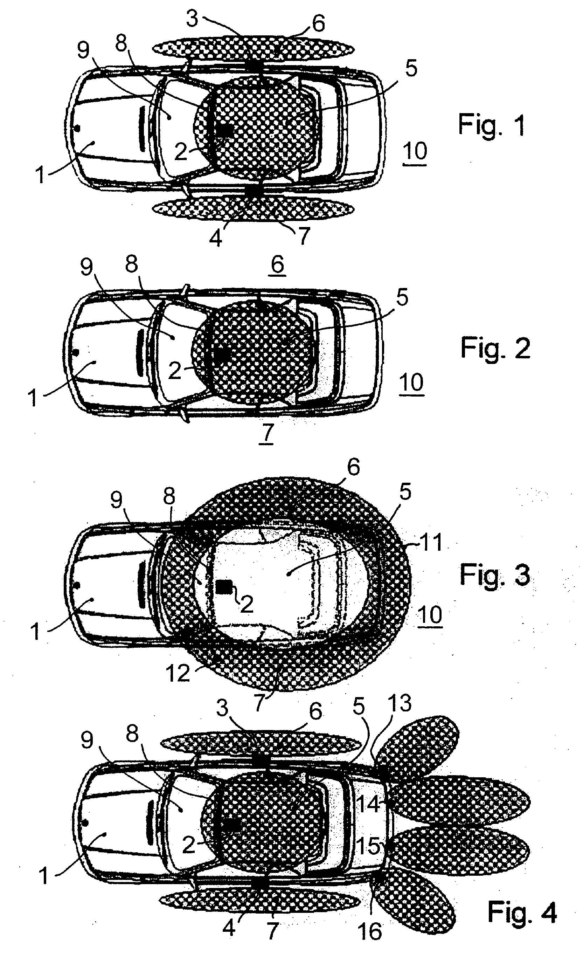

Die in Figur 1 gemäß einem ersten Ausführungsbeispiel in Draufsicht dargestellte Schutzeinrichtung ist an einem Fahrzeug 1 mit Falt- oder Klappverdeck vorgesehen, das durch eine manuelle Betätigung eines Schalters im Fahrgastraum oder an einem Türgriff motorisch über eine Verstelleinrichtung in eine Offenlage oder in eine Schließlage zu verstellen ist. Aus Sicherheitsgründen ist vorgesehen, dass ein motorisches Verstellen des Falt- oder Klappverdecks nur während der manuellen Betätigung des Schalters erfolgt. Wird der Schalter während dem Verstellen des Falt- oder Klappverdecks nicht mehr betätigt, ist die Verstelleinrichtung abgeschaltet und das Falt- oder Klappverdeck bleibt beispielsweise durch die Haltekraft der Verstelleinrichtung in der momentanen Verstelllage festgehalten.

Erfasst ein Regensensor einen feuchten Niederschlag, löst der Regensensor ein Einschalten der motorischen Verstelleinrichtung aus, die dann das Falt- oder Klappverdeck selbsttätig motorisch schließt.

Außerdem kann die motorische Verstelleinrichtung über einen tragbaren Sender einer Fernsteuerungseinrichtung derart eingeschaltet werden, dass sich in Abhängigkeit von dem jeweiligen Schaltbefehl, der über ein Signal von dem Sender auf eine an der Karosserie des Fahrzeugs ortsfeste Empfangseinrichtung ferngesteuert übertragen wird, das Falt- oder Klappverdeck selbsttätig motorisch öffnet oder schließt.

Die Verstelleinrichtung wird bei einem durch den Regensensor oder die Fernsteuerungseinrichtung veranlassten Öffnungs- oder Schließsignal jedoch nur dann eingeschaltet, wenn eine Messeinrichtung mit Überwachungssensoren 2, 3, 4 einerseits im Fahrgastraum 5 und anderseits in den Seitenbereichen 6, 7 des Fahrzeugs 1 kein bewegliches Objekt in diesen Überwachungsbereichen erfasst. Sollte sich ein bewegliches Objekt im Fahrgastraum 5 oder in einem Seitenbereich 6, 7 des Fahrzeugs befinden, wird von der Messeinrichtung eine damit in Verbindung stehende Abschalteinrichtung aktiviert, die ein sofortiges Abschalten der Verstelleinrichtung bewirkt oder ein Einschalten der Verstelleinrichtung verhindert. Die Größe des von der Messeinrichtung überwachten Bereiches des Fahrgastraumes 5 und der Seitenbereiche 6, 7 des Fahrzeugs ist von den verwendeten Überwachungssensoren 2, 3, 4 abhängig und in der Figur lediglich beispielhaft angegeben.

Das in den Figuren 2 und 3 dargestellte zweite Ausführungsbeispiel einer Schutzeinrichtung an einem Fahrzeug mit Falt- oder Klappverdeck funktioniert ähnlich wie das erste Ausführungsbeispiel. Bei dem zweiten Ausführungsbeispiel weist die Messeinrichtung ebenfalls einen Überwachungssensor 2 auf, der den Fahrgastraum 5 bei oder zusätzlich vor dem Verstellen des Falt- oder Klappverdecks auf bewegliche Objekte im Fahrgastraum 5 überwacht.

In Figur 3 ist der bei dem zweiten Ausführungsbeispiel gemäß Figur 2 von wenigstens einem nicht dargestellten Überwachungssensor überwachte Außenbereich dargestellt, der sich kreisringförmig von den Seitenbereichen 6, 7 des Fahrzeugs 1 vorne quer über den Windlauf 8 über der vorderen Windschutzscheibe 9 und am hinteren Fahrzeugende quer über den Heckbereich 10 des Fahrzeugs 1 erstreckt. Bei einer einfachen Ausführung wird der Fahrgastraum 5 von einem einzigen Überwachungssensor 2 überwacht. Erfasst der wenigstens zweite Überwachungssensor sowohl den Fahrgastraum 5 oder einen Teil davon zusätzlich den durch die äußere Umrisskontur 11 umschlossenen Außenbereich des Fahrzeugs 1, so kann durch Differenzbildung der von den Sensoren erfassten Bereiche der in Figur 3 gekennzeichnete Kreisringbereich 12 gebildet werden, der den von der Messeinrichtung überwachten Außenbereich darstellt. Auf diese Weise ist zu erfassen, ob sich ein bewegtes Objekt im äußeren Kreisringbereich 12 oder im Fahrgastraum 5 befindet. Bei einem durch einen Regensensor oder dergleichen oder eine Fernsteuerungseinrichtung bewirkten selbsttätigen Schließen des Falt- oder Klappverdeck oder bei einem durch die Fernsteuerungseinrichtung bewirkten Öffnen des Falt- oder Klappverdecks wird die motorische Verstelleinrichtung abgeschaltet, wenn der Überwachungssensor 5 bzw. der wenigstens weitere Sensor ein bewegtes Objekt im Fahrgastraum 5 oder im Kreisringbereich 12 erfasst.

Das in Figur 4 dargestellte dritte Ausführungsbeispiel weist zur Überwachung des Fahrgastraumes 5 und der äußeren Seitenbereiche 6, 7 eines Kraftfahrzeugs durch eine Messeinrichtung die bei dem ersten Ausführungsbeispiel gemäß Figur 1 verwendeten und mit der Messeinrichtung in Verbindung stehenden Überwachungssensoren 2, 3 und 4 auf. Zusätzlich sind bei dieser Ausführung zur Überwachung des Heckraumes hinter dem Fahrzeug Überwachungssensoren 13 bis 16 einer Parkraum-Überwachungseinrichtung verwendet, die beispielsweise durch Ultraschallsensoren oder dergleichen gebildet sind und die in der Figur keulenförmig gekennzeichneten Heckbereiche auf bewegliche Objekte überwachen. Befindet sich ein bewegliches Objekt, beispielsweise eine Person oder ein Körperteil einer Person in wenigstens einem Bereich dieser Überwachungsbereiche, bewirkt der betreffende Überwachungssensor 13, 14, 15 oder 16 ein Abschalten der Verstelleinrichtung und damit ein Anhalten des Falt- oder Klappverdecks, wodurch ebenfalls ein Einklemmschutz realisiert ist.

Bei allen Ausführungsbeispielen kann vorgesehen sein, dass bei einer durch Signale eines Regensensors oder einer Fernsteuerungseinrichtung initiierten selbsttätigen motorischen Verstellbewegung des Falt- oder Klappverdecks, die wegen einem beweglichen Objekt in einem von der Messeinrichtung überwachten Bereich unterbrochen wurde, nach einer vorgegebenen Zeit eine Aktivierungseinrichtung die motorische Verstelleinrichtung im ursprünglichen Sinn wieder einschaltet, wenn sich nach dieser Zeit kein bewegliches Objekt in den von der Messeinrichtung überwachten Bereichen befindet. Der Vorgang kann wiederholt werden, bis das Falt- oder Klappverdeck vollständig geöffnet oder geschlossen ist.

Die Überwachungssensoren können einzeln oder in Gruppen oder insgesamt beispielsweise durch jeweils einen Ultraschallsensor oder einen Infrarotsensor oder einen Radarsensor oder eine Videokamera gebildet sein. Zur Überwachung eines Bereiches von mehreren zu überwachenden Überwachungsbereichen können auch mehrere Überwachungssensoren vorgesehen sein. Das Falt- oder Klappverdeck kann eventuell auch über einen von einer Person zu betätigenden Schalter im Fahrgastraum oder an einem Türgriff geschlossen und geöffnet werden, wobei aus Sicherheitsgründen vorgesehen sein kann, dass der Schalter während der Verstellbewegung des Falt- oder Klappverdecks ständig zu betätigen ist.

Ebenso ist es möglich dass die Schutzeinrichtung an einer motorisch verstellbaren Tür oder Klappe eines Fahrzeugs vorgesehen ist. In diesem Fall überwacht die Messeinrichtung mit wenigstens einem Sensor zumindest einen einklemmgefährdeten Verstellbereich der Tür oder Klappe. Befindet sich ein bewegliches Objekt in dem Verstellbereich, wird die motorische Verstelleinrichtung in einer zu den Ausführungsbeispielen analogen Weise abgeschaltet.

Damit der Sensor oder Überwachungssensor das motorisch verstellbare Fahrzeugteil nicht als das bewegliche Objekt erkennt, ist der wenigstens eine Überwachungsbereich so festzulegen, dass sich in diesem nicht das verstellbare Fahrzeugteil bewegt. Es kann jedoch auch vorgesehen sein, dass sich das verstellbare Fahrzeugteil in einem von dem Sensor oder einem Überwachungssensor erfassten Überwachungsbereich bewegt, wenn das verstellbare Fahrzeugteil zu erkennen und von anderen beweglichen Objekten zu unterscheiden ist.

## Patentansprüche

1. Fahrzeug mit einem verstellbaren Fahrzeugteil, das in Abhängigkeit von den Signalen wenigstens eines Sensors über eine motorische Verstelleinrichtung verstellbar ist, wobei das Fahrzeug eine Schutzeinrichtung mit einer Messeinrichtung und einer Abschalteinrichtung, umfasst, wobei die Abschalteinrichtung mit der Messeinrichtung verbunden ist und die Verstelleinrichtung abschaltet, wenn die Messeinrichtung ein von einem Normalbetrieb abweichendes Signal wahrnimmt, **dadurch gekennzeichnet, dass** die Messeinrichtung zumindest beim selbsttätigen Verstellen des Fahrzeugteiles einen in der Nähe des motorisch verstellbaren Fahrzeugteiles befindlichen räumlichen Überwachungsbereich (5, 6, 7, 10) überwacht und die Abschalteinrichtung die Verstelleinrichtung abschaltet, wenn sich ein bewegliches Objekt in dem räumlichen Überwachungsbereich (5, 6, 7, 10) befindet.

2. Fahrzeug nach Anspruch 1, **dadurch gekennzeichnet, dass** das motorisch verstellbare Fahrzeugteil ein Falt- oder Klappverdeck ist, das durch Signalabgabe eines Regensensors selbsttätig zu schließen und/oder ferngesteuert zu öffnen und zu schließen ist.

3. Fahrzeug nach Anspruch 1, **dadurch gekennzeichnet, dass** das motorisch verstellbare Fahrzeugteil eine Tür oder Klappe eines Kraftfahrzeugs ist.

4. Fahrzeug nach einem der Ansprüche 1 bis 3, **dadurch gekennzeichnet, dass** nach einer vorgegebenen Zeit nach dem Abschalten der Verstelleinrichtung durch die Abschalteinrichtung eine Aktivierungseinrichtung die Verstelleinrichtung in dem Sinn wie vor dem Abschalten durch die Abschalteinrichtung einschaltet.

5. Fahrzeug nach einem der Ansprüche 1 bis 4, **dadurch gekennzeichnet,** das die Messeinrichtung den Fahrgastraum (5) und/oder Seitenbereiche (6,7) des Fahrzeugs und/oder den Heckbereich (10) des Fahrzeugs und/oder den Bereich vor und über dem oberen Windlauf (8) an der vorderen Windschutzscheibe (9) des Fahrzeugs (1) erfasst.

6. Fahrzeug nach einem der Ansprüche 1 bis 5, **dadurch gekennzeichnet, dass** die Messeinrichtung mehrere Überwachungssensoren (2, 3, 4, 13, 14, 15, 16) aufweist, die unterschiedlichen Raumbereichen zugeordnet sind, die sich überlagern können.

7. Fahrzeug nach Anspruch 1 oder 6, **dadurch gekennzeichnet, dass** der Sensor oder wenigstens ein Überwachungssensor (2, 3, 4, 13, 14, 15, 16) ein Ultraschallsensor oder ein Infrarotsensor oder ein Radarsensor oder eine Videokamera ist.

8. Fahrzeug nach Anspruch 6 oder 7, **dadurch gekennzeichnet, dass** wenigstens ein Überwachungssensor (13, 14, 15, 16) durch einen Überwachungssensor einer anderen Überwachungseinrichtung gebildet ist.

9. Fahrzeug nach Anspruch 8, **dadurch gekennzeichnet, dass** die andere Überwachungseinrichtung eine Diebstahlwarnanlage oder eine Parkraum-Überwachungseinrichtung im Bug- und/oder Heckbereich (10) des Fahrzeugs (1) ist.

## Claims

1. A vehicle with an adjustable vehicle part, which can be adjusted depending on the signals of at least one sensor by means of a motor-driven adjusting device, wherein the vehicle comprises a protection device with a measuring device and a switch-off device, wherein the switch-off device is connected to the measuring device and switches off the adjusting device when the measuring device perceives a signal differing from a normal operation, **characterised in that** the measuring device, at least during the automatic adjustment of the vehicle part, monitors a spatial monitoring region (5, 6, 7, 10) located close to the vehicle part that can be adjusted in a motor-driven manner and the switch-off device switches off the adjusting device when a movable object is located in the spatial monitoring region (5, 6, 7, 10).

2. A vehicle according to claim 1, **characterised in that** the vehicle part that can be adjusted in a motor-driven manner is a folding or hinged top, which is to be automatically closed by the emission of a signal of a rain sensor and/or is to be opened and closed by remote control.

3. A vehicle according to claim 1, **characterised in that** the vehicle part that can be adjusted in a motor-driven manner is a door or flap of a motor vehicle.

4. A vehicle according to any one of claims 1 to 3, **characterised in that** after a predetermined time following the switching off of the adjusting device by the switch-off device, an activation device switches on the adjusting device in accordance with before the switching off by the switch-off device.

5. A vehicle according to any one of claims 1 to 4, **characterised in that** the measuring device measures the passenger compartment (5) and/or side regions (6, 7) of the vehicle and/or the rear region (10) of the vehicle and/or the region in front of and above the upper windscreen panel (8) on the front windscreen (9) of the vehicle (1).

6. A vehicle according to any one of claims 1 to 5, **characterised in that** the measuring device has a plurality of monitoring sensors (2, 3, 4, 13, 14, 15, 16), which are associated with different spatial regions, which may overlap.

7. A vehicle according to claim 1 or 6, **characterised in that** the sensor or at least one monitoring sensor (2, 3, 4, 13, 14, 15, 16) is an ultrasound sensor or an infrared sensor or a radar sensor or a video camera.

8. A vehicle according to claim 6 or claim 7, **characterised in that** at least one monitoring sensor (13, 14, 15, 16) is formed by a monitoring sensor of another monitoring device.

9. A vehicle according to claim 8, **characterised in that** the other monitoring device is an anti-theft alarm system or a parking space monitoring device in the front and/or rear region (10) of the vehicle (1).

## Revendications

1. Véhicule comprenant une partie réglable pouvant être déplacée en fonction des signaux d'au moins un capteur par l'intermédiaire d'un dispositif de réglage motorisé, le véhicule comprenant un dispositif de protection avec un dispositif de mesure et un dispositif de coupure, le dispositif de coupure étant relié au dispositif de mesure et coupant le dispositif de réglage lorsque le dispositif de mesure perçoit un signal s'écartant d'un fonctionnement normal,
**caractérisé en ce que**
le dispositif de mesure surveille, au moins lors d'un déplacement automatique de la partie réglable du véhicule une zone de surveillance spatiale (5, 6, 7, 10) située à proximité de cette partie réglable motorisée, et le dispositif de coupure coupe le dispositif de réglage lorsque un objet mobile est situé dans la zone de surveillance spatiale (5, 6, 7, 10).

2. Véhicule conforme à la revendication 1,
**caractérisé en ce que**
la partie réglable motorisée du véhicule est une capote pliante ou rabattable pouvant être fermée automatiquement par l'émission d'un signal d'un capteur de pluie et/ou être commandée à distance pour permettre son ouverture et sa fermeture.

3. Véhicule conforme à la revendication 1,
**caractérisé en ce que**
la partie réglable motorisée du véhicule est une porte ou une trappe du véhicule.

4. Véhicule conforme à l'une des revendications 1 à 3,
**caractérisé en ce qu'**
après une temporisation prédéfinie suivant la coupure du dispositif de réglage par le dispositif de coupure, un dispositif d'activation branche le dispositif de réglage comme il l'était avant la coupure par le dispositif de coupure.

5. Véhicule conforme à l'une des revendications 1 à 4,
**caractérisé en ce que**
le dispositif de mesure détecte la partie interne (5) et/ou les zones latérales (6, 7) du véhicule et/ou la zone de l'arrière (10) du véhicule et/ou la zone située en avant et sur l'auvent (8) sur le pare-brise avant (9) du véhicule (1).

6. Véhicule conforme à l'une des revendications 1 à 5,
**caractérisé en ce que**
le dispositif de mesure comprend plusieurs capteurs de surveillance (2, 3, 4, 13, 14, 15, 16) qui sont associés à différentes zones spatiales qui peuvent se superposer.

7. Véhicule conforme à la revendication 1 ou 6,
**caractérisé en ce que**
le capteur ou au moins un capteur de surveillance (2, 3, 4, 13, 14, 15, 16) est un capteur à ultrasons ou un capteur infrarouge ou un capteur radar ou une vidéo-caméra.

8. Véhicule conforme à la revendication 6 ou 7,
**caractérisé en ce qu'**
au moins un capteur de surveillance (13, 14, 15, 16) est formé par un capteur de surveillance d'un autre dispositif de surveillance.

9. Véhicule conforme à la revendication 8,
**caractérisé en ce que**
l'autre dispositif de surveillance est une installation d'alarme antivol ou une installation de surveillance d'emplacement de stationnement située dans la zone de l'avant ou de l'arrière (10) du véhicule (1).
